# FASCICULE DE BREVET EUROPEEN

(11) **EP 3 021 147 B1**
(45) Date de publication et mention de la délivrance du brevet: **15.01.2020**
(21) Numéro de dépôt: 15194839.5
(22) Date de dépôt: 17.11.2015
(51) Int. Cl.: G02B 6/38

(54) **BOÎTIER POUR CONNECTEUR OPTIQUE À ALIGNEMENT AUTOMATIQUE**
GEHÄUSE FÜR OPTISCHES VERBINDUNGSELEMENT MIT AUTOMATISCHER AUSRICHTUNG
HOUSING FOR OPTICAL CONNECTOR WITH AUTOMATIC ALIGNMENT

(30) Priorité: 17.11.2014 FR 1461040
(43) Date de publication de la demande: 18.05.2016
(73) Titulaire: SOURIAU, 78000 Versailles (FR)
(72) Inventeur: Salmon, Xavier, 72560 Change (FR); Vin, Eric, 72000 Le Mans (FR)
(74) Mandataire: Ipside

(56) Documents cités:
- WO-A1-2011/033387
- US-A- 5 581 645
- US-A1- 2006 193 562
- US-A1- 2008 050 070
- US-B1- 6 398 423

## Description

L'invention concerne un boîtier pour connecteur optique à alignement automatique. Le dispositif objet de l'invention est plus particulièrement, mais non exclusivement, destiné à la connexion de fibres optiques dans un environnement exposé où le connecteur est susceptible de subir des sollicitations mécaniques ou environnementales. Les connecteurs optiques standards, par exemple de type « LC » selon la norme IEC 61754 partie 20, permettent d'assembler facilement, deux fibres optiques bout à bout par encliquetage. Un tel connecteur standard, comporte une virole, ou embout, ou « *ferrule »* en anglais, constituée d'une pièce cylindrique en céramique ou en acier, d'un diamètre extérieur normalisé, généralement 1,25 mm ou 2,5 mm, et comportant un alésage axial au diamètre de la fibre, de l'ordre de 0,125 mm dans lequel la fibre dénudée est insérée, et généralement collée au moyen d'une résine époxyde. L'extrémité de la fibre est affleurante avec l'extrémité de l'embout, les deux étant polis conjointement selon un profil normalisé pour assurer un affleurement parfait. Cet ensemble est intégré dans un support de connexion constitué de matière plastique ou de métal, lequel support de connexion, outre les fonctions de protection mécanique, comprend, à l'image d'une prise électrique, des surfaces fonctionnelles pour la connexion, le centrage et le verrouillage. Les fibres optiques destinées à la réalisation de réseaux sont livrées revêtues et pourvues à leurs extrémités de connecteurs normalisés.

La connexion axiale de deux fibres optiques est réalisée par la mise en contact des extrémités des embouts ou viroles de deux connecteurs. Contrairement à une connexion électrique entre deux conducteurs qui est réalisée par brochage d'une prise mâle dans une prise femelle, la continuité du signal entre des fibres optiques est assurée par la mise en contact des extrémités des fibres ainsi assemblées, selon une coaxialité et un alignement parfaits. À la différence d'un connecteur électrique, où il y a un connecteur mâle et un connecteur femelle, la connexion de deux fibres bout à bout est réalisée en mettant en oeuvre deux connecteurs du même type réunis par une interface de connexion. Ladite interface de connexion assure le coaxialité des fibres par l'intermédiaire du centrage des viroles dans un manchon, et, en coopération avec les supports de connexion, des fonctions de verrouillage et de chargement axial de la connexion.

Le connecteur standard est adapté pour une utilisation dans des conditions dites de bureau où ledit connecteur n'est pas soumis à des contraintes environnementales, telles que l'humidité, ou à des contraintes mécaniques.

À la différence d'une connexion électrique, où le contact mécanique entre les conducteurs est assuré par brochage élastique, le contact entre fibres optiques est très sensible à toutes les composantes d'un torseur d'efforts appliqué au connecteur, de sorte qu'une déformation, même très faible du connecteur se répercute sur l'alignement des fibres connectées, ou sur leur contact et conduit à des défauts dans la transmission du signal.

Le document WO2008/045509 décrit un boîtier de connexion adapté à la connexion de fibres multiples en nappe, utilisant un connecteur spécifique, non normalisé, doublement articulé et suspendu axialement sur un ressort hélicoïdal de compression. Ce dispositif permet un auto-alignement des viroles connectées, un chargement axial des contacts et une protection desdits contacts vis-à-vis de l'environnement. Toutefois, ce dispositif de l'art antérieur est coûteux de réalisation et utilise des moyens de connexion spécifiques. Ce dispositif de l'art antérieur est ainsi adapté aux applications de type FTTN ou FTTC utilisant un faisceau de fibres et nécessite l'installation desdites fibres et leur polissage dans ce connecteur spécifique.

Le document US 5,581,645 décrit un boîtier de connexion adapté à la connexion de fibres optiques comprenant un insert coulissant dans un logement cylindrique d'une première partie du boîtier, une interface de connexion fixée à l'insert, un ressort appliquant un effort axial sur l'insert vers une seconde partie du boîtier, une interface de réception à l'intérieur de la seconde partie du boîtier, ainsi que des moyens d'accouplement des deux parties du boîtier. L'insert est centré dans le logement cylindrique du fait de l'absence de jeu. Après accouplement des deux parties, l'insert reste fixe dans son logement.

L'invention vise à résoudre les inconvénients de l'art antérieur et concerne à cette fin un boîtier de connexion pour fibre optique, selon la revendication 1.

Ainsi, le dispositif objet de l'invention utilise des connecteurs standards et des fibres équipées d'un tel connecteur. La fonction d'auto-alignement est réalisée par la coopération du jeu radial de l'insert dans son logement, des moyens de suspension axiale et du contact entre la surface de référence et la surface de réception, sans la réalisation d'articulations complexes et coûteuses. La dissociation de la fonction d'accouplement des deux parties du boîtier objet de l'invention et des fonctions de centrage des embouts des connecteurs, permet d'adapter économiquement ledit boîtier à tout type de connecteur normalisé, en changeant simplement l'interface fixée à l'insert.

L'invention est avantageusement mise en œuvre selon les modes de réalisation exposés ci-après, lesquels sont à considérer individuellement ou selon toute combinaison techniquement opérante.

Avantageusement ; l'interface de connexion comporte une surface fonctionnelle apte à coopérer avec une surface fonctionnelle de l'interface de réception pour l'orientation relative des deux interfaces. Ce mode de réalisation est particulièrement adapté à la connexion de connecteurs dont le support de connexion est prismatique.

Avantageusement, les deux parties du boîtier objet de l'invention comprennent :
g. des moyens d'étanchéité à l'entrée de la fibre dans lesdites parties ;
h. des moyens d'étanchéité aptes à coopérer avec les moyens d'accouplement pour l'étanchéité de l'accouplement des deux parties.

Ce mode de réalisation est particulièrement adapté pour une utilisation en extérieur ou dans des environnements sévères en termes d'humidité ou de poussières.

Selon un mode de réalisation du boîtier objet de l'invention, l'insert cylindrique et l'interface de réception sont montés de manière amovible dans chacune des parties.

Ce mode de réalisation permet d'adapter facilement le boîtier à différents types de connecteurs standards.

Avantageusement, le boîtier objet de l'invention comporte un bouchon amovible sur l'extrémité ouverte de chacune des deux parties. Ainsi, l'intérieur de chacune des parties et ses connexions sont protégés de l'environnement avant accouplement des deux parties.

Selon un mode de réalisation particulier une membrane opercule ferme l'extrémité ouverte de chaque partie du boîtier objet de l'invention. Ce mode de réalisation procure une protection renforcée des contacts optiques avant la connexion.

L'invention concerne également, un ensemble préconstitué, ou kit, comprenant :
i. un boîtier de connexion apte à recevoir un insert et une interface de réception amovibles ;
ii. une pluralité d'inserts cylindriques fixés à différentes interfaces de connexion standard ;
iii. une pluralité d'interfaces de réception correspondant aux interfaces de connexion standard des inserts cylindriques.

Un tel kit permet d'adapter sur place le boîtier au type connecteur des fibres optiques. L'absence de dispositif d'articulation complexe permet d'adapter facilement et sans outil particulier le boîtier objet de l'invention.

Avantageusement, les interfaces de connexion standard correspondant aux inserts cylindriques et aux interfaces de réceptions du kit objet de l'invention sont aptes à recevoir des connecteurs compris dans les types ST, LC, MU, LX et LSH selon la norme IEC 61754.

L'invention est exposée ci-après selon ses modes de réalisation préférés, nullement limitatifs, et en référence aux figures 1 à 7 dans lesquelles :
- la figure 1 montre, selon une vue en perspective et en éclaté, un exemple de réalisation d'un boîtier de connexion selon l'invention, adapté pour une connexion en rallonge, associé soit à un boîtier de connexion de même type soit à un contre écrou pour une connexion en façade ;
- la figure 2 représente, selon une vue en perspective et en éclaté, d'embase et l'interface de connexion du boîtier de connexion avec un contre-écrou ;
- la figure 3 montre selon une vue en perspective et en éclaté un exemple de connexion au moyen du boîtier de connexion objet de l'invention ;
- la figure 4 est une vue selon la coupe AA définie figure 3 de l'ensemble représenté figure 2, sans les fibres optiques ;
- la figure 5 est une vue selon la coupe AA de l'assemblage de la figure 3 ;
- la figure 6 représente, selon une vue en perspective, une des parties du boîtier objet de l'invention selon un mode de réalisation comprenant un opercule sur la face ouverte de ladite partie et un bouchon amovible ;
- et la figure 7 représente, selon une vue de face d'une variante de connexion au moyen d'un insert flottant.

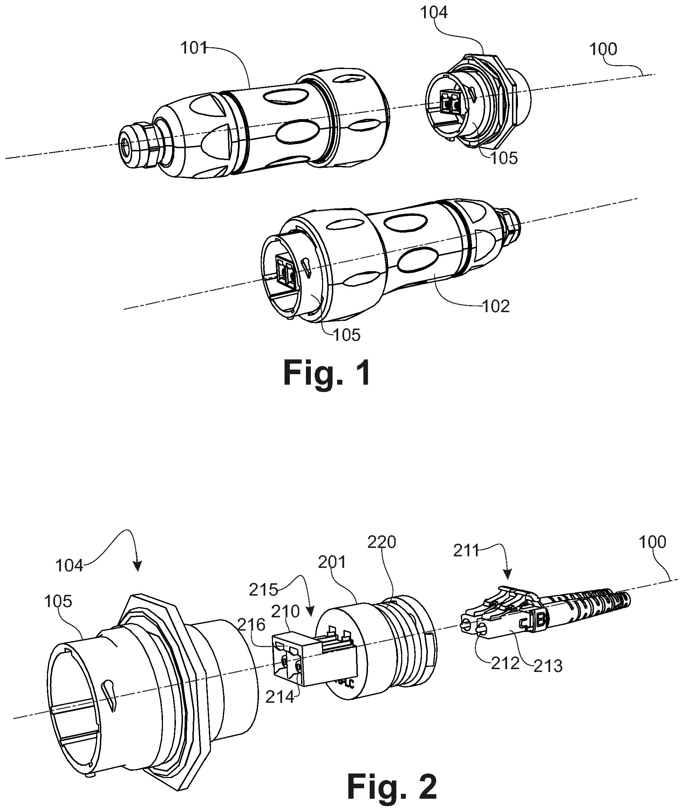

Figure 1, selon un exemple de réalisation, le boîtier de connexion objet de l'invention comprend deux parties (101, 102, 104). La première partie (101) comporte des moyens d'accouplement aptes à coopérer avec une embase (105) de forme conjuguée. Selon un exemple de réalisation les deux parties (101, 102) du boîtier de connexion sont similaires et permettent une connexion en rallonge. Alternativement, l'une des partie (104) portant l'embase (105) est sous la forme d'un contre écrou (104), et est adaptée à une installation à travers une façade ou une plaque.

Figure 2, selon cet exemple de réalisation, le boîtier objet de l'invention est adapté à la connexion de fibres optiques en couple, terminées par un connecteur (211) de type LC. Alternativement, les moyens du boîtier sont adaptés à une connexion monofibre terminée par un autre connecteur standard, par exemple de type ST. Le connecteur standard comporte un embout (212), aussi dénommé « *ferrule* », à l'intérieur duquel se trouve la fibre optique dont l'extrémité est affleurante avec l'extrémité de l'embout (212). Ledit connecteur standard comporte par ailleurs un support de connexion qui comprend des moyens mécaniques de verrouillage et de référence. L'embase (105) comporte un logement (204) cylindrique apte à recevoir un insert (201). Ledit insert comporte une interface (210) de connexion adaptée à la forme des connecteurs (211) des fibres optiques. Cette interface de connexion comporte un manchon (214), apte à recevoir l'embout (212) du connecteur (211) et un embout en vis-à-vis pour leur alignement axial et la réalisation de la connexion optique. Selon cet exemple de réalisation, l'interface de connexion (210) vient de matière avec l'insert, l'ensemble étant, par exemple, obtenu par injection plastique. Selon un mode de réalisation alternatif (non représenté) l'interface de connexion est liée de manière amovible à l'insert par exemple par encliquetage. Ainsi, le même ensemble de connexion est utilisable pour différents types de connecteurs standards, simplement en changeant cette interface de connexion. L'interface de connexion comprend des surfaces fonctionnelles (215) aptes à coopérer avec le support de connexion, pour l'orientation et le verrouillage du connecteur (211), et une surface de référence (216) qui en collaboration avec une surface de réception permet de positionner axialement le plan optique de connexion des fibres optiques.

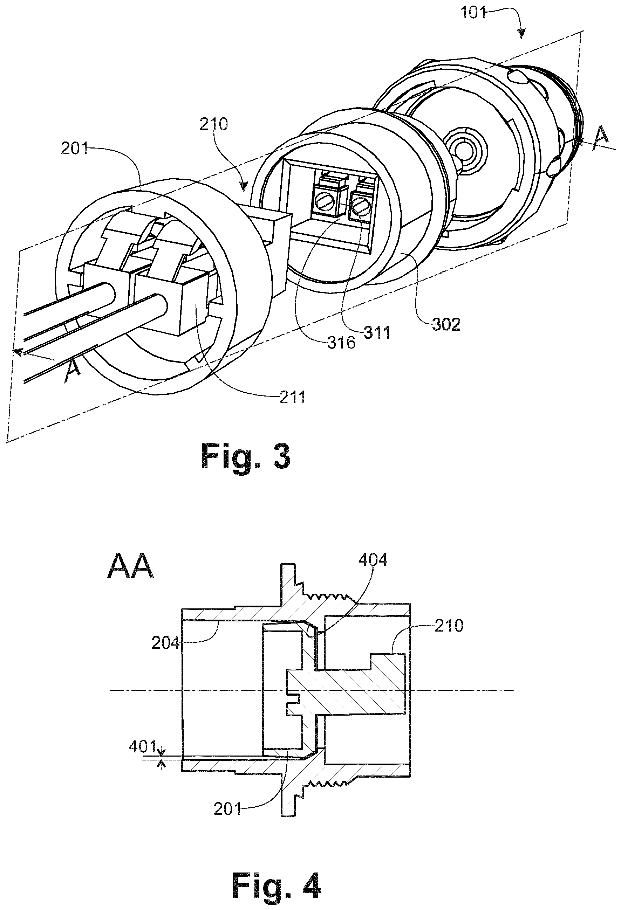

Figure 3, selon cet exemple de réalisation, l'autre partie du boîtier de connexion objet de l'invention comprend une interface (302) de réception, laquelle interface de réception comporte des moyens aptes à coopérer avec le support de connexion d'un connecteur (311) pour le positionnement et le verrouillage dudit connecteur et une surface (316) de réception apte à coopérer avec la surface de référence de l'interface de connexion. Ainsi, lorsque la surface de référence de l'interface de connexion est appliquée contre la surface de réception de l'interface de réception, les embouts des connecteurs (211, 311) des fibres optiques sont parfaitement positionnés l'un par rapport à l'autre dans le manchon de l'interface de connexion pour la transmission des signaux entre les fibres ainsi connectées. Selon cet exemple de réalisation, la surface de réception (316) et la surface de référence sont des surfaces planes perpendiculaires à la direction axiale de connexion. Alternativement, le couple de surfaces comprend deux surfaces complémentaires de toute forme, notamment conique ou sphérique. Avantageusement, l'interface (210) de connexion et l'interface (302) de réception comportent des surfaces fonctionnelles coopérant pour orienter les deux interfaces l'une par rapport à l'autre. En plus de leur rôle de positionnement relatif ces surfaces fonctionnelles transmettent les sollicitations entre les deux parties du boîtier de connexion.

Figure 4, l'insert (201) comporte un jeu (401) radial avec le logement (204) de l'embase. Ledit logement (204) comporte une portion (404) conique apte à coopérer avec une portion conique de l'insert. Ainsi, lorsque l'insert et poussé axialement dans l'embase de sorte que lesdites portions coniques entrent en contact, l'insert et l'embase sont parfaitement concentriques, alors que lorsque lesdites portions coniques sont écartées l'une de l'autre, le jeu radial (401) autorise une excentration et un désalignement de l'insert par rapport à l'embase.

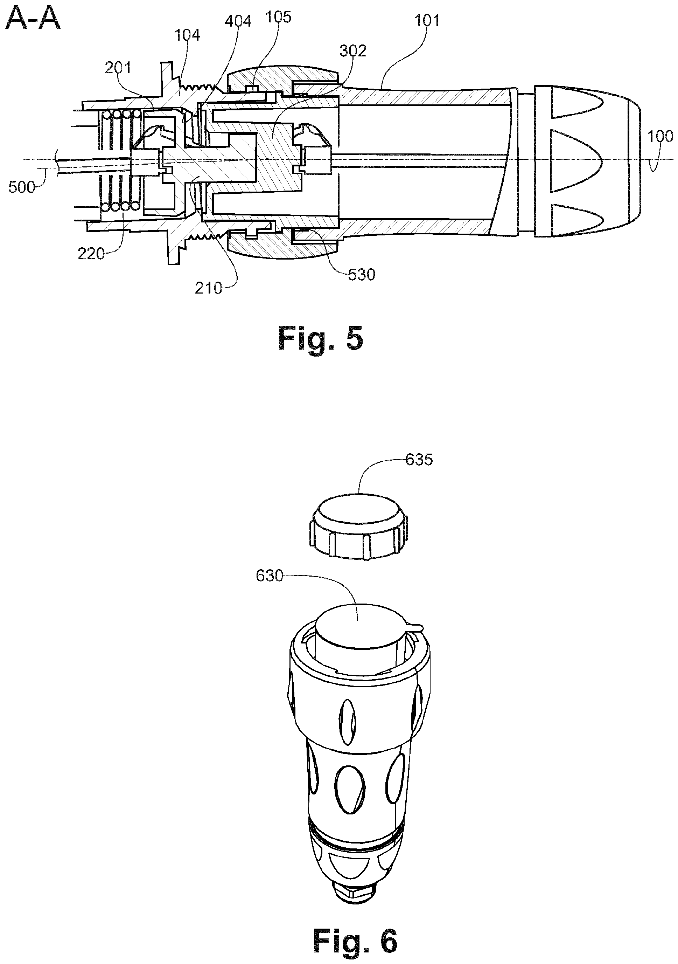

Figure 5, selon un exemple de réalisation, l'interface de réception est liée de manière rigide au corps d'une des parties (101) du boîtier connexion, alors que, du fait du jeu radial, l'insert supportant l'interface de connexion est flottant dans l'embase. Ainsi, pour réaliser la connexion entre les deux parties, avant que celles-ci ne soient assemblées, le ressort (220) de compression pousse axialement l'insert (201) dans l'embase (105) de sorte que les portions coniques de l'insert et du logement de l'embase sont en contact et que l'interface de connexion est centrée par rapport à l'embase, ce qui facilite l'approche et l'accostage des deux parties du boîtier de connexion. Lorsque l'interface de connexion pénètre ou accoste l'interface (302) de réception, l'effort de résistance à l'introduction de l'interface de connexion dans ladite interface de réception repousse l'insert (201) en comprimant le ressort (220) de sorte de que les portions coniques de l'insert et de l'embase (105) ne sont plus en contact et que le flottement dudit insert dans le logement de l'embase, permet l'orientation relative de l'interface de réception et de l'interface de connexion. Le dimensionnement du boîtier de connexion objet de l'invention est tel que lorsque l'accouplement de deux parties est réalisé et que la surface de référence de l'interface de connexion est en contact avec la surface de réception, le ressort (220) est comprimé et les portions coniques de l'insert et de l'embase ne sont pas en contact. Ainsi, l'effort produit par le ressort (220) comprimé assure le contact des embouts des connecteurs et la transmission du signal entre les fibres optiques ainsi connectées. Par ailleurs, le jeu radial entre l'insert et le logement de l'embase autorise un désalignement de l'axe (500) de l'insert par rapport à l'axe (100) longitudinal de connexion du boîtier objet de l'invention, sans dommage pour les contacts optiques. Ainsi, le boîtier de connexion objet de l'invention est apte à protéger la connexion des efforts extérieurs, le boîtier étant apte à subir une déformation significative sous l'effet de ces efforts sans dégrader les conditions de contact. Avantageusement, le boîtier de connexion comprend des moyens (530) d'étanchéité pour protéger la connexion des agents extérieurs.

Figure 1, le boîtier de connexion, selon cet exemple de réalisation, comprend également des moyens (130) pour assurer l'étanchéité au niveau de l'entrée des fibres optiques dans le boîtier.

Figure 6, selon un exemple de réalisation les fibres optiques sont pré-installées dans chaque partie du boîtier de connexion et la partie ouverte de ces parties est fermée par un opercule (630) qui permet de protéger les contacts des poussières jusqu'à l'utilisation du boîtier de connexion, ledit opercule (630) étant retiré juste avant la connexion. De manière additionnelle ou indépendante, selon un autre mode de réalisation, l'extrémité ouverte de la partie du boîtier de connexion, est fermée par un bouchon (635) amovible.

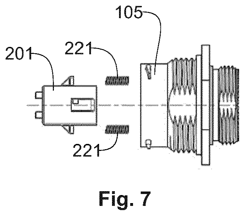

Figure 7, selon un exemple de réalisation l'embase (105) comporte un logement apte à recevoir un insert (201) mobile. L'insert est rectangulaire et monté sur deux ressorts (221).

La description ci-avant et les exemples de réalisation montrent que l'invention atteint les objectifs visés, en particulier elle permet de réaliser une connexion protégée de fibres optiques tout en utilisant des fibres pourvu de connecteurs standard à leur extrémité. Avantageusement, les interfaces de connexion et de réception sont installées dans des corps de boîtier utilisable également pour des connexions électriques.

## Revendications

1. Boîtier de connexion pour fibre optique, adapté à une forme de connecteur (211, 311) standard, comportant deux parties (101, 102, 104) aptes à être assemblées l'une avec l'autre selon une direction (100) axiale par leurs extrémités ouvertes, lequel boîtier comporte :
a. un logement (204) cylindrique ménagé à l'intérieur d'une embase (105) portée par la première (102, 104) des deux parties, ledit logement (204) comportant une première portion (404) conique ;
b. un insert (201) apte à coulisser à l'intérieur dudit logement cylindrique (204), comprenant une seconde portion conique apte coopérer avec ladite première portion (404) conique, et comprenant en outre un jeu (401) radial par rapport audit logement ;
c. une interface (210) de connexion fixée audit insert (201) et comprenant
ci. un manchon (214) de réception des embouts (212) d'une première paire de connecteurs (211) de la forme standard ;
cii. des surfaces fonctionnelles (215) aptes à coopérer avec les surfaces fonctionnelles du support (213) de connexion de ladite première paire de connecteurs (211) standard ;
ciii. une surface (216) de référence ;
d. des moyens (220) élastiques aptes à appliquer un effort axial dirigé vers la seconde partie (101) du boîtier sur l'insert (201) ;
e. une interface (302) de réception fixée à l'intérieur de la seconde partie (101) du boîtier et comportant :
ei. un passage axial pour une deuxième paire de connecteurs (311) standard ;
eii. une surface (316) de réception apte à arrêter axialement la surface (216) de référence de l'interface (210) de connexion de la première partie lorsque les deux parties sont connectées ; où
eiii. lorsque l'interface de connexion pénètre ou accoste l'interface (302) de réception, l'effort de résistance à l'introduction de l'interface de connexion dans ladite interface de réception repousse l'insert (201) en comprimant des moyens élastiques (220) de sorte de que les portions coniques de l'insert et de l'embase (105) ne sont plus en contact et que le flottement dudit insert (201) dans le logement cylindrique de l'embase, permet l'orientation relative de l'interface (302) de réception et de l'interface (210) de connexion ;
f. des moyens d'accouplement aptes à solidariser les deux parties du boîtier et à appliquer la surface (216) de référence de l'interface de connexion contre la surface (316) de réception.

2. Boîtier selon la revendication 1, dans lequel l'interface (210) de connexion comporte une surface fonctionnelle apte à coopérer avec une surface fonctionnelle de l'interface (302) de réception pour l'orientation relative des deux interfaces.

3. Boîtier selon la revendication 1, dans lequel les deux parties (101, 102, 104) comprennent :
g. des moyens d'étanchéité à l'entrée de la fibre dans lesdites parties ;
h. des moyens (530) d'étanchéité aptes à coopérer avec les moyens d'accouplement pour l'étanchéité de l'accouplement des deux parties.

4. Boîtier selon la revendication 1, dans lequel l'insert (201) cylindrique et l'interface (302) de réception sont montés de manière amovible dans chacune des parties.

5. Boîtier selon la revendication 1, comprenant un bouchon (635) amovible sur l'extrémité ouverte de chacune des deux parties.

6. Boîtier selon la revendication 1, comprenant une membrane (630) opercule fermant l'extrémité ouverte de chaque partie.

7. Ensemble préconstitué, dit kit, comprenant :
i. un boîtier (101, 102) de connexion selon la revendication 4 ;
ii. une pluralité d'inserts (201) cylindriques fixés à différentes interfaces (210) de connexion standard ;
iii. une pluralité d'interfaces (302) de réception correspondant aux interfaces (210) de connexion standard des inserts (201) cylindriques.

8. Kit selon la revendication 7, dans lequel les interfaces de connexion standard correspondant aux inserts cylindriques et aux interfaces de réceptions sont aptes à recevoir des connecteurs compris dans les types ST, LC, MU, LX et LSH selon la norme IEC 61754.

## Patentansprüche

1. Anschlussdose für eine optische Faser, die an eine Form eines standardmäßigen Steckverbinders (211, 311) angepasst ist, umfassend zwei Teile (101, 102, 104), die geeignet sind, gemäß einer axialen Richtung (100) über ihre offenen Enden zusammengefügt zu werden, wobei die Dose umfasst:
a. eine zylindrische Aufnahme (204), die im Inneren eines Sockels (105) eingerichtet ist, der von dem ersten (102, 104) der zwei Teile getragen wird, wobei die Aufnahme (204) einen ersten konischen Abschnitt (404) umfasst;
b. einen Einsatz (201), der geeignet ist, im Inneren der zylindrischen Aufnahme (204) zu gleiten, umfassend einen zweiten konischen Abschnitt, der geeignet ist, mit dem ersten konischen Abschnitt (404) zusammenzuwirken, und weiter umfassend ein in Bezug auf die Aufnahme radiales Spiel (401);
c. eine Anschlussschnittstelle (210), die an dem Einsatz (201) fixiert ist und umfasst
ci. eine Hülse (214) zur Aufnahme von Endstücken (212) eines ersten Steckverbinderpaares (211) mit standardmäßiger Form;
cii. Funktionsoberflächen (215), die geeignet sind, mit den Funktionsoberflächen des Anschlussträgers (213) des ersten standardmäßigen Steckverbinderpaares (211) zusammenzuwirken;
ciii. eine Referenzoberfläche (216);
d. elastische Mittel (220), die geeignet sind, eine axiale Kraft, die zu dem zweiten Teil (101) der Dose hin gerichtet ist, auf den Einsatz (201) anzuwenden;
e. eine Aufnahmeschnittstelle (302), die im Inneren des zweiten Teils (101) der Dose fixiert ist und umfasst:
ei. einen axialen Durchgang für ein zweites standardmäßiges Steckverbinderpaar (311);
eii. eine Aufnahmeoberfläche (316), die geeignet ist, die Referenzoberfläche (216) der Anschlussschnittstelle (210) des ersten Teils axial zu stoppen, wenn die zwei Teile verbunden werden; wobei
eiii. wenn die Anschlussschnittstelle in die Aufnahmeschnittstelle (302) eindringt oder daran anlegt, die Widerstandskraft beim Einführen der Anschlussschnittstelle in die Aufnahmeschnittstelle den Einsatz (201) zurückschiebt, indem die elastischen Mittel (220) zusammengedrückt werden, so dass die konischen Abschnitte des Einsatzes und des Sockels (105) nicht mehr in Kontakt sind und das Schwimmen des Einsatzes (201) in der zylindrischen Aufnahme des Sockels die relative Ausrichtung der Aufnahmeschnittstelle (302) und der Anschlussschnittstelle (210) ermöglicht;
f. Kopplungsmittel, die geeignet sind, die zwei Teile der Dose fest zu verbinden und die Referenzoberfläche (216) der Anschlussschnittstelle gegen die Aufnahmeoberfläche (316) zu drücken.

2. Dose nach Anspruch 1, wobei die Anschlussschnittstelle (210) eine Funktionsoberfläche umfasst, die geeignet ist, mit einer Funktionsoberfläche der Aufnahmeschnittstelle (302) für die relative Ausrichtung der zwei Schnittstellen zusammenzuwirken.

3. Dose nach Anspruch 1, wobei die zwei Teile (101, 102, 104) umfassen:
g. Dichtungsmittel am Eintritt der Faser in die Teile;
h. Dichtungsmittel (530), die geeignet sind, mit den Kopplungsmitteln für die Dichtheit der Kopplung der zwei Teile zusammenzuwirken.

4. Dose nach Anspruch 1, wobei der zylindrische Einsatz (201) und die Aufnahmeschnittstelle (302) abnehmbar in jedem der Teile montiert sind.

5. Dose nach Anspruch 1, umfassend einen abnehmbaren Verschluss (635) auf dem offenen Ende von jedem der zwei Teile.

6. Dose nach Anspruch 1, umfassend eine Deckelmembran (630), die das offene Ende von jedem Teil verschließt.

7. Vorgebildete Baugruppe, ein so genannter Satz, umfassend:
i. eine Anschlussdose (101, 102) nach Anspruch 4;
ii. eine Vielzahl von zylindrischen Einsätzen (201), die an unterschiedlichen standardmäßigen Anschlussschnittstellen (210) fixiert sind;
iii. eine Vielzahl von Aufnahmeschnittstellen (302), die den standardmäßigen Anschlussschnittstellen (210) der zylindrischen Einsätze (201) entsprechen.

8. Satz nach Anspruch 7, wobei die standardmäßigen Anschlussschnittstellen, die den zylindrischen Einsätzen und den Aufnahmeschnittstellen entsprechen, geeignet sind, Steckverbinder aufzunehmen, die eingeschlossen sind in den Typen ST, LC, MU, LX und LSH gemäß der Norm IEC 61754.

## Claims

1. Connection housing for optical fibre, suitable for a standard connector shape (211, 311), comprising two portions (101, 102, 104) able to be assembled together along an axial direction (100) by the open ends thereof, said housing comprises:
a. a cylindrical housing (204) arranged inside a base (105) carried by the first (102, 104) of the two portions, said housing (204) comprising a first tapered portion (404) ;
b. an insert (201) able to slide inside said cylindrical housing (204), comprising a second tapered portion able to cooperate with said first tapered portion (404), and further comprising a radial play (401) with respect to said housing;
c. a connection interface (210) fixed to said insert (201) and comprising
ci. a sleeve (214) for receiving endpieces (212) of a first pair of connectors (211) of the standard shape
cii. functional surfaces (215) able to cooperate with the functional surfaces of the connection support (213) of said first pair of standard connectors (211);
ciii. a reference surface (216);
d. elastic means (220) able to apply an axial force directed towards the second portion (101) of the housing on the insert (201);
e. a receiving interface (302) fixed inside the second portion (101) of the housing and comprising:
ei. an axial passage for a second pair of standard connectors (311);
eii. a receiving surface (316) able to axially stop the reference surface (216) of the connection interface (210) of the first portion when the two portions are connected; where
eiii. when the connection interface penetrates or accosts or the receiving interface (302), the resistance force to the introduction of the connection interface into said receiving interface pushes back the insert (201) by compressing elastic means (220) in such a way that the tapered portions of the insert and of the base (105) are no longer in contact and the floating of said insert (201) in the cylindrical housing of the base, allows for the relative orientation of the receiving interface (302) and of the connection interface (210);
f. means for coupling able to render integral the two portions of the housing and to apply the reference surface (216) of the connection interface against the receiving surface (316).

2. Housing according to claim 1, wherein the connection interface (210) comprises a functional surface able to cooperate with a functional surface of the receiving interface (302) for the relative orientation of the two interfaces.

3. Housing according to claim 1, wherein the two portions (101, 102, 104) comprise:
g. means of sealing at the inlet of the fibre into said portions;
h. means of sealing (530) able to cooperate with the means of coupling for the seal of the coupling of the two portions.

4. Housing according to claim 1, wherein the cylindrical insert (201) and the receiving interface (302) are removably mounted in each one of the portions.

5. Housing according to claim 1, comprising a removable plug (635) on the open end of each one of the two portions.

6. Housing according to claim 1, comprising a membrane seal (630) that closes the open end of each portion.

7. Pre-constituted unit, referred to as kit, comprising:
i. a connection housing (101, 102) according to claim 4;
ii. a plurality of cylindrical inserts (201) fixed to different standard connection interfaces (210);
iii. a plurality of receiving interfaces (302) corresponding to standard connection interfaces (210) of the cylindrical inserts (201).

8. Kit according to claim 7, wherein the standard connection interfaces corresponding to the cylindrical inserts and to the receiving interfaces are able to receive connectors included in the types ST, LC, MU, LX and LSH according to the standard IEC 61754.
